# EUROPEAN PATENT APPLICATION

(11) **EP 4 835 710 A1**
(43) Date of publication of application: **04.11.2026**
(21) Application number: 26174148.2
(22) Date of filing: 23.04.2026
(51) Int. Cl.: G06F 21/60, G06F 21/45

(54) **PROCESSING APPARATUS AND DISPLAY METHOD**

(30) Priority: 28.04.2025 JP 2025074783
(71) Applicant: Sharp Kabushiki Kaisha, Sakai City, Osaka 590-8522 (JP)
(72) Inventor: MASUI, Yuuki, Osaka 590-8522 (JP)
(74) Representative: Müller Hoffmann & Partner

(57) **Abstract**

A processing apparatus (10) includes: an executor (1010) that executes a maintenance function, a display (140), and one or more controllers (100). The one or more controllers (100) display, on the display (140), a login screen with a transition button and for a service engineer to log in to a mode for executing the maintenance function, display, when administrator approval for execution of the maintenance function by the service engineer has not been given, an approval screen on the display (140) upon selection of the transition button on the login screen, and receive, on the approval screen, a giving instruction for the administrator approval for the execution of the maintenance function by the service engineer.

## Description

### CROSS-REFERENCE TO RELATED APPLICATION

The present application claims priority from Japanese Application JP2025-074783, the content to which is hereby incorporated by reference into this application.

### BACKGROUND OF THE INVENTION

### 1. Field of the Invention

The present disclosure relates to a processing apparatus and the like.

### 2. Description of the Related Art

For example, JP 2005-202539 A discloses an image processing apparatus in which an administrator determines an item to which an access right is given among user data and issues a password having a maintenance management authority including the access right, and a maintenance worker can access the user data to perform maintenance work.

### SUMMARY

An object of the present disclosure is to provide, for example, a processing apparatus and the like that enable a service engineer to appropriately execute maintenance of the processing apparatus.

A processing apparatus of the present disclosure includes: an executor that executes a maintenance function, a display, and one or more controllers. The one or more controllers display, on the display, a login screen with a transition button and for a service engineer to log in to a mode for executing the maintenance function, display, when administrator approval for execution of the maintenance function by the service engineer has not been given, an approval screen on the display upon selection of the transition button on the login screen, and receive, on the approval screen, a giving instruction for the administrator approval for the execution of the maintenance function by the service engineer.

A display method of the present disclosure includes: an execution step of executing a maintenance function; a display step; and a control step. The control step includes displaying, in the display step, a login screen with a transition button and for a service engineer to log in to a mode for executing the maintenance function, displaying, when administrator approval for execution of the maintenance function by the service engineer has not been given, an approval screen in the display step upon selection of the transition button on the login screen, and receiving, on the approval screen, a giving instruction for the administrator approval for the execution of the maintenance function by the service engineer.

The present disclosure provides, for example, a processing apparatus that enables a service engineer to appropriately execute maintenance of the processing apparatus.

### BRIEF DESCRIPTION OF THE DRAWINGS

FIG. 1 is a diagram illustrating an overview of an apparatus according to a first embodiment.
FIG. 2 is a diagram illustrating a configuration of hardware of the apparatus according to the first embodiment.
FIG. 3 is a diagram illustrating a state transition in the first embodiment.
FIG. 4A is a diagram illustrating an example of a configuration of software of the apparatus according to the first embodiment.
FIG. 4B is a diagram illustrating an example of maintenance function information according to the first embodiment.
FIG. 4C is a diagram illustrating an example of administrator information according to the first embodiment.
FIG. 5 is a diagram illustrating a flow of main processing according to the first embodiment.
FIG. 6 is a diagram illustrating a flow of approval change processing in the first embodiment.
FIG. 7 is a diagram illustrating a flow of maintenance function execution processing in the first embodiment.
FIG. 8A is a diagram illustrating an example of an operation example in the first embodiment.
FIG. 8B is a diagram illustrating an example of an operation example in the first embodiment.
FIG. 9A is a diagram illustrating an example of an operation example in the first embodiment.
FIG. 9B is a diagram illustrating an example of an operation example in the first embodiment.
FIG. 9C is a diagram illustrating an example of an operation example in the first embodiment.
FIG. 10A is a diagram illustrating an example of a configuration of software of an apparatus according to a second embodiment.
FIG. 10B is a diagram illustrating an example of classification information according to the second embodiment.
FIG. 11 is a diagram illustrating a flow of approval change processing in the second embodiment.
FIG. 12 is a diagram illustrating a flow of maintenance function execution processing in the second embodiment.
FIG. 13 is a diagram illustrating an operation example according to the second embodiment.
FIG. 14 is a diagram illustrating an example of administrator information according to a third embodiment.
FIG. 15 is a diagram illustrating a flow of main processing according to the third embodiment.
FIG. 16 is a diagram illustrating a flow of approval change processing in the third embodiment.
FIG. 17A is a diagram illustrating an example of an operation example in the third embodiment.
FIG. 17B is a diagram illustrating an example of an operation example in the third embodiment.
FIG. 18A is a diagram illustrating an example of a configuration of software of an apparatus according to a fourth embodiment.
FIG. 18B is a diagram illustrating an example of user information according to the fourth embodiment.
FIG. 19 is a diagram illustrating a flow of approval change processing in the fourth embodiment.
FIG. 20A is a diagram illustrating an example of an operation example in the fourth embodiment.
FIG. 20B is a diagram illustrating an example of an operation example in the fourth embodiment.
FIG. 21A is a diagram illustrating an example of an operation example in the fourth embodiment.
FIG. 21B is a diagram illustrating an example of an operation example in the fourth embodiment.
FIG. 21C is a diagram illustrating an example of an operation example in the fourth embodiment.
FIG. 22 is a diagram illustrating a flow of main processing in a fifth embodiment.
FIG. 23 is a diagram illustrating a flow of approval change processing in the fifth embodiment.

### DETAILED DESCRIPTION OF THE INVENTION

The maintenance functions of a processing apparatus include a function of executing data operations requiring administrator authority, such as acquisition, modification, and deletion of user data, and enabling/disabling of functions related to security. For example, there is a security problem that when an administrator issues a password for giving an access right to user data, a service engineer who has acquired the password shares it with another service engineer, causing the service engineer unintended by the administrator to access the user data.

A case where a processing apparatus of the present disclosure for solving such problems is applied to an image forming apparatus will be described below in the following embodiments with reference to the drawings. It is to be noted that the embodiments described below are merely examples for explaining the contents described in the claims, and the technical scope of the present disclosure is not limited to the descriptions of these embodiments.

### 1. First Embodiment

### 1.1 Overall Configuration

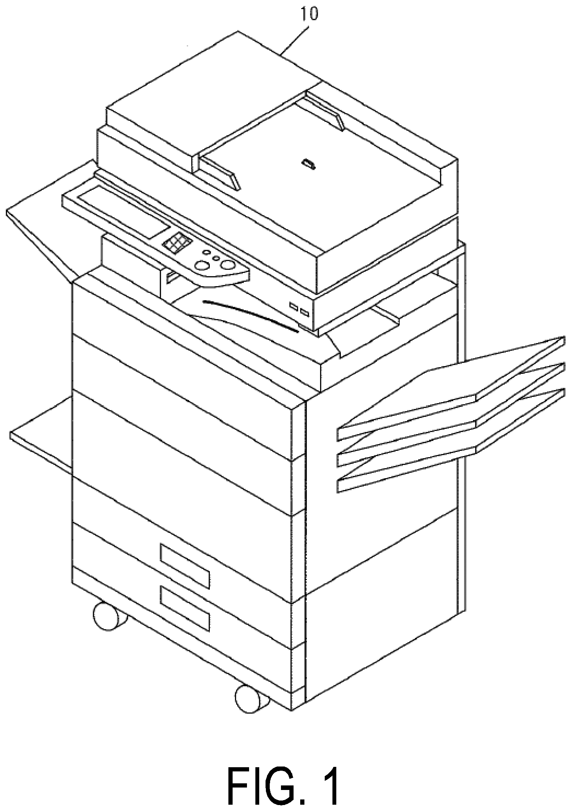

FIG. 1 is a diagram illustrating an overview of an image forming apparatus 10.

The image forming apparatus 10 may be, for example, a printing apparatus or may be a multifunction printer or an apparatus referred to as a multifunction peripheral/printer (MFP). For example, when executing a job (print job), the image forming apparatus 10 can form an image on a sheet that is a recording medium. The image forming apparatus 10 can execute jobs for a plurality of functions including a copy function, FAX function, a scan function, and a print function.

The image forming apparatus of the present disclosure is also applicable to, for example, an image processing apparatus or an image forming apparatus having a single function such as a scanner or a printer.

Here, a general user who uses the image forming apparatus 10 is referred to as a "user". A person who can manage the image forming apparatus 10 is referred to as an "administrator". The administrator may be assigned separately from the user, or may be realized by giving the user a privilege as an administrator. For example, in the case of a company, a person in charge of a system section may be assigned to the administrator.

A person who executes a maintenance function of the image forming apparatus 10 is referred to as a "service engineer" or a "maintenance worker". The service engineer can execute specific maintenance work such as a self-test, execution of a diagnosis mode, counter clear, print adjustment, and density adjustment. The service engineer generally corresponds to a technician of a manufacturer of the image forming apparatus 10 or a customer engineer.

### 1.2 Hardware Configuration

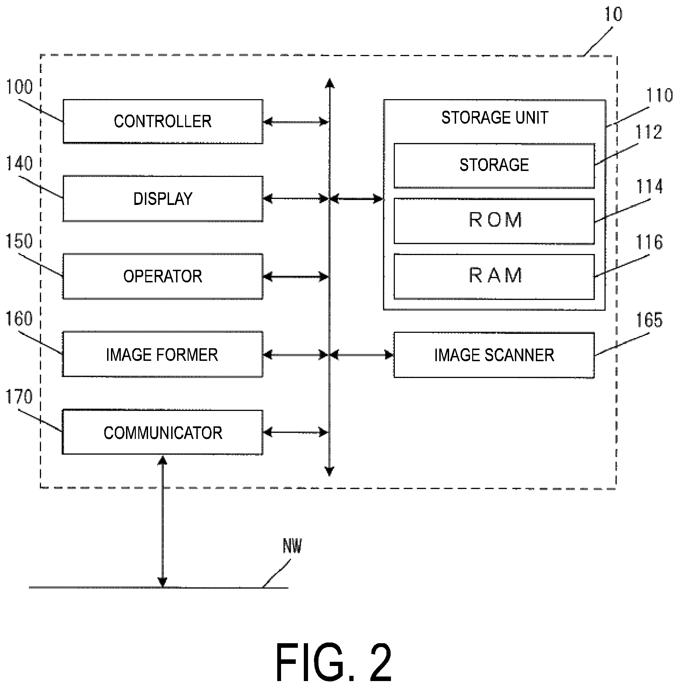

FIG. 2 illustrates a hardware configuration of the image forming apparatus 10 as a representative apparatus among the apparatuses included in the present disclosure, and will be described below with reference to the drawing. FIG. 2 is a diagram illustrating an example of the image forming apparatus 10. The image forming apparatus 10 also has general functions as necessary.

As illustrated in FIG. 2, the image forming apparatus 10 includes a controller 100, a storage 112 as a storage unit 110, a read only memory (ROM) 114, and a random access memory (RAM) 116, a display 140, an operator 150, an image former 160, an image scanner 165, and a communicator 170.

The controller 100 controls the image forming apparatus 10 as a whole. The controller 100 enables various functions by loading and executing various programs stored in the storage unit 110 (for example, the storage 112 or the ROM 114). The controller 100 may be implemented by one or more control devices/arithmetic devices (central processing unit (CPU) or system on a chip (SoC)). The controller 100 may include one or more control circuits.

The storage unit 110 is one or more storage apparatuses in which various programs and various types of data necessary for an operation of the image forming apparatus 10 are stored. The storage unit is configured by, for example, the storage 112, the ROM 114, and the RAM 116.

The storage 112 is a non-volatile storage apparatus capable of storing programs and data. For example, the storage may be configured with a storage apparatus such as a Hard Disk Drive (HDD) or a Solid State Drive (SSD). The storage 112 may also have a configuration such as an external storage medium such as a universal serial bus (USB) memory connectable as an external device. The storage 112 may be, for example, a storage area on a cloud.

The ROM 114 is a non-volatile memory capable of holding programs and data even in a case that the power is turned off.

The RAM 116 is a main memory mainly used when the controller 100 executes processing. The RAM 116 is a rewritable memory that temporarily holds a program loaded from the storage 112, the ROM 114 or the like, and data including processing execution results.

The display 140 is a display apparatus that can display various types of information and various screens such as an execution screen. The display 140 may be, for example, a display apparatus such as a liquid crystal display (LCD), an organic electro-luminescence (EL) display, or an electrophoresis display. The display 140 includes an interface to which the display apparatus can be connected. For example, the display may include an external display apparatus connected via a high-definition multimedia interface (HDMI; trade name), a digital visual interface (DVI), or a display port.

The operator 150 is an operation apparatus that allows a user to input an operation. For example, the operator may be software keys displayed on a touch panel integrated with the display 140 or hardware keys such as operation buttons. The operator 150 may be, for example, an operation apparatus such as a keyboard or a mouse. The operator 150 may also include an interface (USB, for example) to which an operation apparatus can be connected. For example, the image forming apparatus 10 may be connected to different operation apparatuses (keyboard, mouse, and the like) via an interface.

The image former 160 forms an image on, for example, a recording sheet. The image former 160 includes, for example, an image carrier, and forms an image by forming a toner image on the image carrier and transferring the toner image on the image carrier onto the recording sheet. The image former 160 may be configured as an image forming apparatus such as a printer. The image former 160 may electronically form an image as an image file.

The image scanner 165 scans a document (image) and outputs the document as image data. The image scanner 165 is, for example, a scanner, and may be a reading device that utilizes a charge coupled device (CCD), a contact image sensor (CIS), or a complementary metal-oxide-semiconductor (CMOS) image sensor.

The communicator 170 is a communication interface that communicates with other apparatuses. The communicator may be, for example, a network interface capable of providing wired connection or wireless connection. In the present embodiment, communication with other apparatuses is possible via a network NW.

A network (NW) connecting the image forming apparatus 10 may be any communication line or communication system and may utilize, for example, a local area network (LAN) that utilizes wired or wireless technology, a virtual local area network (VLAN), the Internet, or a public line network, or a communication system such as mobile communication (mobile communication such as 4G/5G/6G) or a next-generation telephone network.

The processing apparatus of the present disclosure is applicable not only to the image forming apparatus 10 but also to, for example, a single-function image forming apparatus such as a scanner or a printer, an information processing apparatus such as a computer or a server device, or a terminal apparatus such as a smartphone or a tablet. The processing apparatus may be a video device such as a camera or a home appliance (for example, an air conditioner, a refrigerator, a television, or the like) equipped with an IoT function, or may be a portable apparatus or an in-vehicle apparatus (for example, a car navigation or the like).

### 1.3 Description of Mode

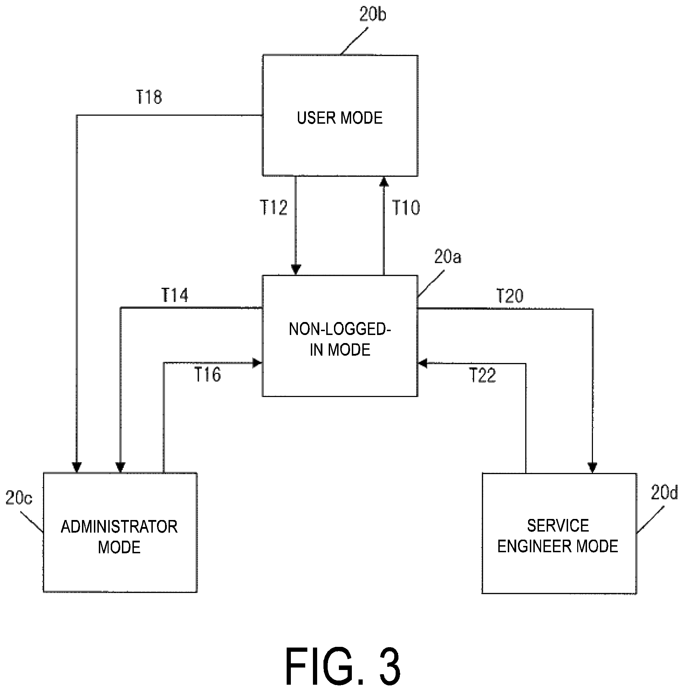

Each mode capable of executing main functions in the image forming apparatus 10 of the present disclosure will be described with reference to FIG. 3. The modes of functions of the image forming apparatus 10 include, for example, a non-logged-in mode 20a, a user mode 20b, an administrator mode 20c, and a service engineer mode 20d.

### (1) Non-logged-in mode 20a

The non-logged-in mode 20a is a mode when a user is not logged in to any of the user mode 20b, the administrator mode 20c, and the service engineer mode 20d. For example, the mode is an initial mode that is executed when the image forming apparatus 10 is activated.

### (2) User mode 20b

The user mode 20b is a mode in which the user logs in to the image forming apparatus 10 as a user. In the user mode 20b, the user can execute user functions described later. When user login processing T10 is executed from the non-logged-in mode 20a, the mode transitions to the user mode 20b.

For example, in the user login processing T10, when the user inputs, as authentication information, a user ID and a password as necessary, the user logs in to the user mode 20b.

### (3) Administrator mode 20c

The administrator mode 20c is a mode in which the user logs in to the image forming apparatus 10 as an administrator. In the administrator mode 20c, the administrator can execute administrator functions described later. When administrator login processing T14 is executed from the non-logged-in mode 20a, the mode transitions to the administrator mode. When the administrator login processing T18 is similarly executed from the user mode 20b, the mode transitions to the administrator mode 20c.

For example, in the administrator login processing T14 (T18), when the administrator inputs an administrator ID and an administrator password as authentication information, the administrator logs in to the administrator mode 20c.

### (4) Service engineer mode 20d

The service engineer mode 20d is a mode in which the user logs in to the image forming apparatus 10 as a service engineer. In the service engineer mode 20d, the service engineer can execute a maintenance function described below. When service engineer login processing T20 is executed from the non-logged-in mode 20a, the mode transitions to the service engineer mode 20d.

For example, in the service engineer login processing T20, when the service engineer inputs, as authentication information, a service engineer ID and a password as necessary, the service engineer logs in to the service engineer mode 20d.

As the user ID, the administrator ID, and the service engineer ID described above, for example, a common ID in which an attribute of the administrator or the service engineer is associated with the ID may be used.

When logout processing is performed from each mode, the mode transitions to the non-logged-in mode 20a. For example, when logout processing T12 is executed in the user mode 20b, logout processing T16 is executed in the administrator mode 20c, and logout processing T22 is executed in the service engineer mode 20d, the mode transitions to the non-logged-in mode 20a.

### 1.4 Software Configuration

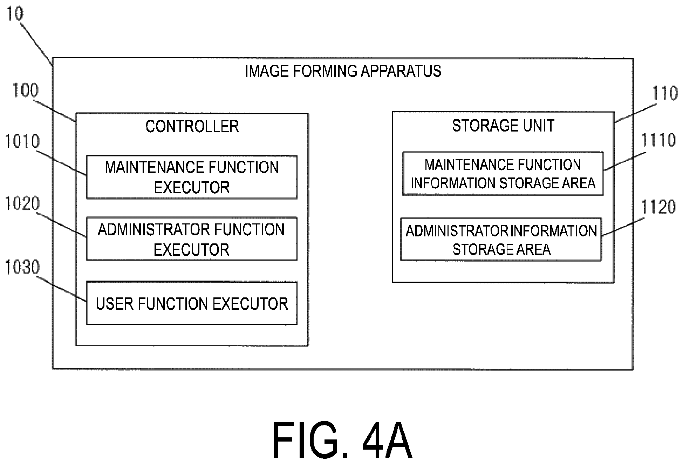

A main software configuration of the image forming apparatus 10 included in the present disclosure will be described with reference to FIG. 4A. In the software configuration illustrated in FIG. 4A, configurations necessary for the present embodiment are mainly described, and other configurations are omitted.

First, the main software configuration of the image forming apparatus 10 will be described. For example, the controller 100 can implement a maintenance function executor 1010, an administrator function executor 1020, and a user function executor 1030 by reading and executing programs stored in the storage 112 and the ROM 114.

The maintenance function executor 1010 can execute maintenance functions in the service engineer mode 20d. Here, the maintenance functions refer to functions related to maintenance such as various adjustments of an apparatus that cannot be executed by the administrator functions.

In the present embodiment, the maintenance functions that can be executed by the service engineer are classified into, for example, the following four categories.

### (1) No restriction

For example, a function of optical system sensor check, a function of scanner operation check, and the like correspond thereto. As for a function classified as no restriction, a service engineer can execute the function regardless of whether or not there is approval from the administrator.

### (2) Management data clear

For example, a copy counter clear function, a FAX transmission/reception counter clear function, and the like correspond thereto. As for a function classified as management data clear, the service engineer cannot execute the function unless the administrator approves the function.

### (3) Switching between enabling/disabling of security function

For example, an enabling/disabling function of an encryption function, enabling/disabling of a security enhancement function, and the like correspond thereto. As for a function classified as switching between enabling/disabling of a security function, the service engineer cannot execute the function unless the administrator approves the function.

### (4) Input, output, and deletion of user data

For example, a function of checking user data, a function of editing user data, and the like correspond thereto. As a function classified as input, output, and deletion of user data, the service engineer cannot execute the function unless the administrator approves the function.

(2) to (4) may be functions that can be executed even if there is no approval from the administrator. For example, in addition to (1), the service engineer may execute (4) regardless of whether or not there is approval from the administrator. In this case, when the service engineer executes the functions of classifications (2) and (3), the approval of the administrator is required.

The administrator function executor 1020 may execute the administrator functions in the administrator mode 20c. Here, the administrator functions refer to functions related to management of the apparatus and includes functions such as a network setting function, a language setting function, and a sheet setting function.

The user function executor 1030 may execute the user functions in the user mode 20b. Here, the user functions refer to a function related to a job and includes, for example, a copy function, a FAX function, a scan function, a print function, and other functions.

The user function executor 1030 may execute some of the user functions in the non-logged-in mode 20a.

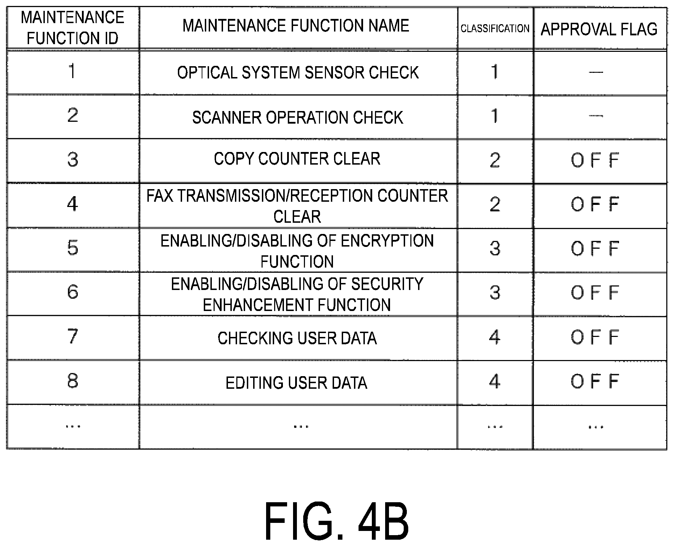

The storage unit 110 secures a maintenance function information storage area 1110 for storing maintenance function information. Here, an example of the maintenance function information stored in the maintenance function information storage area 1110 will be described with reference to FIG. 4B. As the maintenance function information, a maintenance function ID (for example, "7"), a maintenance function name (for example, "checking user data"), a maintenance function classification (for example, "4"), and an approval flag (for example, "invalid") are stored as identification information uniquely assigned to each type of maintenance function information. Here, the approval flag is information indicating whether or not there is approval from the administrator. For example, in a state where there is approval from the administrator (approved state), the approval flag is "ON". In a state where there is no approval from the administrator (unapproved state), the approval flag is "OFF". Here, as an example of the approval flag, "ON" and "OFF" are described in the present embodiment, but numerical values such as "1" and "0" may be used. In the present embodiment, it is only necessary to manage the approved state and the unapproved state, and thus a method other than the flag (for example, management by a file, management by a database, or management by an attribute) may be used.

In the present embodiment, the maintenance function of classification "1" can be executed by the service engineer regardless of whether or not the administrator approves the maintenance function. Therefore, the approval flag does not have to be stored (described as "-" in FIG. 4B).

In FIG. 4B, the approval flag is stored for each function as an example, but the approval flag may be stored corresponding to the service engineer mode 20d.

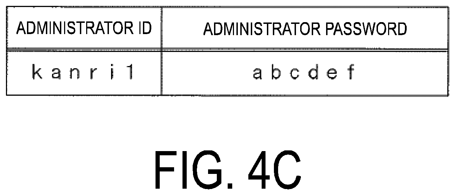

The storage unit 110 secures an administrator information storage area 1120 for storing administrator information. The administrator information is information including at least an administrator password for the administrator to manage the image forming apparatus 10. Here, an example of the administrator information stored in the administrator information storage area 1120 will be described with reference to FIG. 4C. As the administrator information (the identification information of the administrator), the administrator ID (for example, "kanri1") and the administrator password (for example, "abcdef") are stored.

### 1.5 Processing Flow

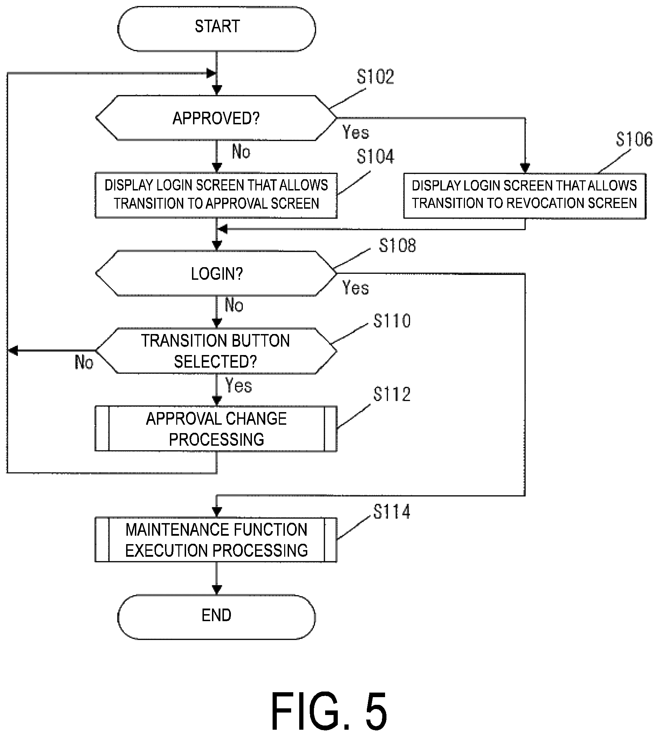

Hereinafter, a processing flow in the present embodiment will be described with reference to FIGS. 5 to 7. In the present embodiment, a case where the service engineer executes the maintenance function will be described as an example. That is, a case of executing the service engineer login processing T20 described with reference to FIG. 3 will be described below.

### 1.5.1 Main Processing

FIG. 5 is a diagram illustrating a flow of main processing. First, the controller 100 determines whether or not the execution of the maintenance function by the service engineer is currently approved by the administrator (S102). For example, when the approval flag included in the maintenance function information is "ON", the controller 100 determines that approval is given (approved state).

If it is determined that approval has not been given by the administrator, the controller 100 causes the display 140 to display a login screen that allows transition to an approval screen for the administrator to give approval (S102; No → S104). Here, the login screen that allows transition to the approval screen is a login screen for the service engineer to log in to a mode for executing the maintenance function of the image forming apparatus 10, on which a transition button for transitioning to the approval screen is displayed (hereinafter, may be simply referred to as a "login screen for service engineers"). At this time, the transition button may have an attribute of "approval". The transition button may include a display indicating that attribute (for example, "administrator approval").

On the other hand, if it is determined that approval has already been given by the administrator, the controller 100 causes the display 140 to display a login screen that allows transition to a revocation screen for revoking the approval (S102; Yes → S106). Here, the login screen that allows transition to the revocation screen is a login screen for service engineers on which a transition button for transitioning to the revocation screen is displayed. At this time, the transition button may have an attribute of "revocation". The transition button may include a display indicating that attribute (for example, "approval revocation").

If the service engineer logs in on the login screen, the controller 100 performs maintenance function execution processing (S108; Yes → S114).

On the other hand, if the transition button is selected without the login by the operation of the service engineer, the controller 100 executes approval change processing (S108; No → S110; Yes → S112).

If neither login nor the transition button is selected, the controller 100 may repeatedly execute the processing from S102 (S108; No → S110; No → S102).

### 1.5.2 Approval Change Processing

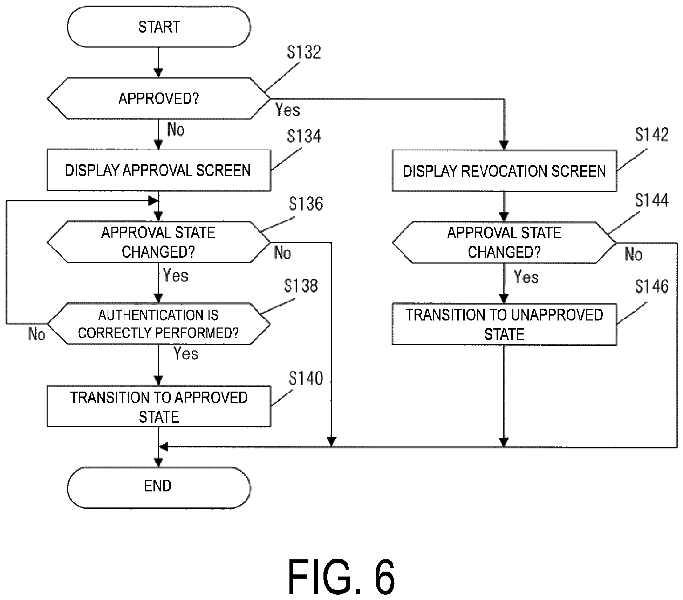

FIG. 6 is a diagram illustrating a flow when the transition button is selected. First, the controller 100 determines whether approval is given by the administrator (S132). Here, the controller 100 may make, by any method, a determination on whether or not approval is given by the administrator.

### (1) Determination based on attribute of transition button

The controller 100 makes the determination on whether approval is given by the administrator, on the basis of the attributes of the transition button selected in S110 in FIG. 5. For example, if the attribute of the transition button is "approval", the controller 100 executes S134 (S132; No → S134). If the attribute of the transition button is "revocation", the controller 100 executes S142 (S132; Yes → S142).

### (2) Determination based on approval flag (for example, maintenance function information)

The controller 100 makes the determination on the basis of the content of the approval flag. For example, if the approval flag included in the maintenance function information is "OFF", the controller 100 executes S134 (S132; No → S134). If the approval flag is "ON", the controller 100 executes S142 (S132; Yes → S142).

The controller 100 displays the approval screen in S134 (S134). The approval screen preferably has an input field for inputting a password necessary for giving the administrator approval. Here, the password necessary for giving the administrator approval is, for example, a password of the administrator, and the administrator inputs the password. Accordingly, the administrator can approve the service engineer to execute the maintenance function.

The approval screen may use an authentication method other than password input (for example, IC card authentication, voice authentication, or the like). The approval screen may display a current approval state (for example, unapproved). The approval screen may display, for example, the contact information of the administrator.

Then, if the administrator inputs a password and performs an operation of changing (giving) the approval state, the controller 100 determines whether authentication is correctly performed (S136; Yes → S138). Then, if the authentication is correctly performed, the controller 100 transitions to the approved state, determining that approval is given by the administrator (S138; Yes → S140). For example, the controller 100 sets the approval flag to "ON".

On the other hand, if the authentication has not correctly been performed, the controller 100 may, for example, receive input of a password again (S138; No → S136).

When the approval has already been given, the controller 100 displays the revocation screen (S142). A password is not necessarily input on the revocation screen. The revocation screen may display the current state (for example, approved). The revocation screen may display, for example, the contact information of the administrator.

If an operation of changing the approval state is performed by the service engineer or the like, the controller 100 revokes the current approval state (administrator approval given state) and changes the approval state to the unapproved state (S144; Yes → S146). In FIG. 6, since a case where a password is not input on the revocation screen is illustrated, the processing corresponding to S138 is not executed on the revocation screen. Here, even on the revocation screen, in the case of inputting a password, the processing corresponding to S138 may be executed between S144 and S146.

For example, if an operation of changing the approval state has not been performed on the approval screen (S136; No), or if an operation of changing the approval state has not been performed on the revocation screen (S144; No), the controller 100 may end the processing.

The above-described operation flow is an example, and partially different processing may be performed. The controller 100 may display, for example, a selection screen for selecting a service engineer to whom the administrator gives approval, between S138 and S140. For example, when, on the login screen, the service engineer logs in by using an IC card, voice authentication, or the like, processing of linking the authentication method of the service engineer with the approval of the administrator may be performed between S138 and S140.

### 1.5.3 Maintenance Function Execution Processing

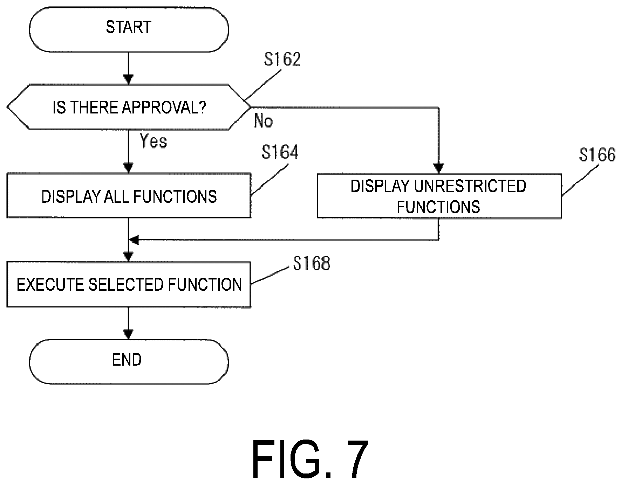

FIG. 7 is a flowchart illustrating an operation of the maintenance function execution processing.

When there is an operation for performing maintenance work by the service engineer (for example, an operation for executing the service engineer login processing T20), the controller 100 determines whether or not the administrator has approved the maintenance work by the service engineer (S162). That is, it is determined whether the current service engineer mode is in the "approved" state and the approval flag is "ON", or it is in the "unapproved" state and the approval flag is "OFF".

For example, if the approval flag is "ON", the controller 100 displays that all the functions (functions for which the approval flag is "ON") among the maintenance functions are executable (S162; Yes → S164). On the other hand, if the approval flag is "OFF", the controller 100 displays that some of the maintenance functions are restricted (S162; No → S166).

Then, when a number corresponding to the maintenance function desired for execution is input by the service engineer, the controller 100 displays a screen for executing the maintenance function corresponding to the input number, and accepts the maintenance work from the service engineer (S168).

The approval given by the administrator to the service engineer continues to be valid until a predetermined time elapses. As an example, when a predetermined time (for example, 23:59 or later) is reached on the day following the day approval is given by the administrator to transition to the approved state, the controller 100 may execute processing of changing the approval from the administrator for the maintenance work by the service engineer to the unapproved state.

### 1.6 Operation Example

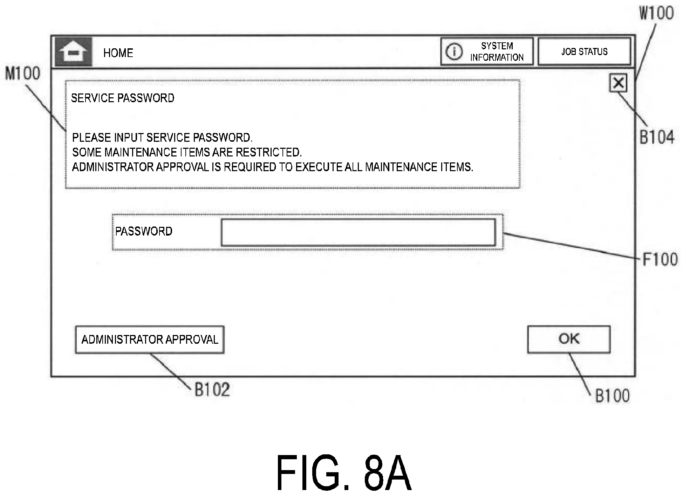

FIGS. 8A to 9C are diagrams illustrating examples of operations of the image forming apparatus 10 in the present embodiment. FIG. 8A is a diagram illustrating an operation of the display screen displayed on the display 140 of the image forming apparatus 10 when the approval from the administrator for the maintenance work by the service engineer is in the unapproved state, as the login screen for executing the service engineer login processing T20.

A display screen W100 in FIG. 8A displays a message M100 stating that "Service password: Please input the service password. Some maintenance items are restricted. Administrator approval is required to execute all maintenance items". Further, the display screen W100 displays an entry form F100 for the service engineer to input a password, a display button B100 for executing login processing, and a display button B102 as the transition button for transitioning to the approval screen of the administrator. A display button B 104 for canceling the execution of the service engineer login processing T20 is displayed on the display screen W100.

Here, when the service engineer inputs a password in the entry form F100 and selects the display button B100, for example, a display screen W140 may be displayed as a screen for inputting a number corresponding to a maintenance function that the service engineer desires to execute. Alternatively, the controller 100 may display a display screen on the display 140, the display screen displaying an executable maintenance function of "no restriction" such as an optical system sensor check function or a scanner operation check function.

When the user selects the display button B104, for example, the controller 100 controls the display 140 to end the display of the display screen (the display screen W100 in FIG. 8A) and transition the display of the screen to the previous screen or transition to the home screen.

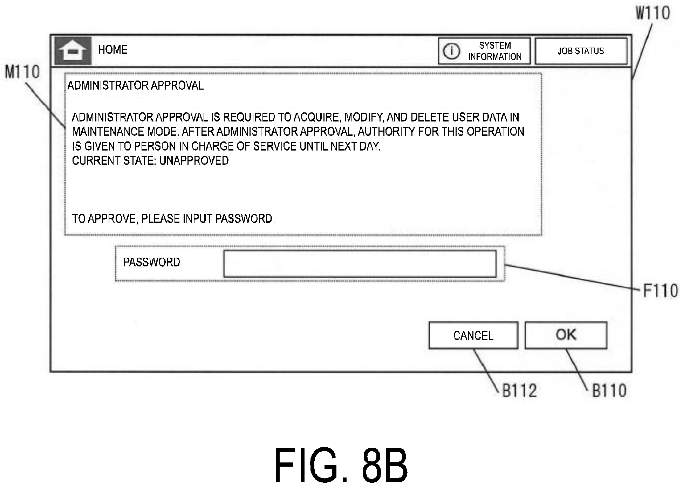

FIG. 8B is a diagram illustrating an operation of the display screen displayed on the display 140 of the image forming apparatus 10 as an approval screen transitioned from the display screen W100 when the service engineer or the administrator selects the display button B102.

A display screen W110 in FIG. 8B displays a message M110 stating that "Administrator approval: Administrator approval is required to acquire, modify, and delete user data in the maintenance mode. After the administrator approval, the authority for this operation is given to the person in charge of service until the next day. Current status: Unapproved. To approve, please input the password".

Further, the display screen W110 displays an entry form F110 for the administrator to input an administrator password, a display button B110 for giving administrator approval to transition to the approved state, and a display button B112 for ending the display of the display screen W110 and displaying the display screen W100.

Here, when the administrator inputs the administrator password in the entry form F110 and selects the display button B110, the controller 100 performs authentication of the administrator. Then, when the authentication of the administrator is successful, the controller 100 displays a display screen W120 on the display 140.

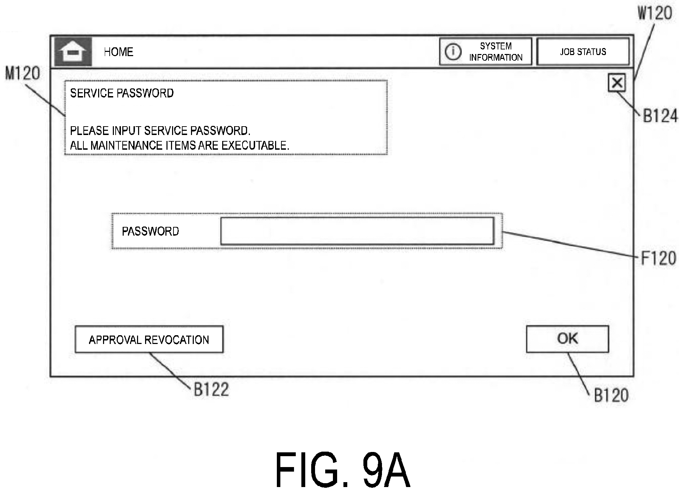

FIG. 9A is a diagram illustrating an operation of the display screen displayed on the display 140 of the image forming apparatus 10 when the approval from the administrator for the maintenance work by the service engineer is in the approved state, as the login screen for executing the service engineer login processing T20.

A display screen W120 in FIG. 9A displays a message M120 stating that "Service password: Please input the service password. All maintenance items are executable". Further, the display screen W120 displays an entry form F120 for the service engineer to input a password, a display button B120 for executing login processing, and a display button B122 as a transition button for transitioning to a revocation screen for revoking the approval from the administrator for the maintenance work by the service engineer. The display screen W120 displays a display button B124 for canceling the execution of the service engineer login processing T20.

Here, when the service engineer inputs a password in the entry form F120 and selects the display button B120, for example, W140 may be displayed as a screen for inputting a number corresponding to the maintenance function that the service engineer desires to execute. Alternatively, the controller 100 may, for example, display, on the display 140, a display screen displaying all the executable maintenance functions.

When the user selects the display button B124, for example, the controller 100 controls the display 140 to end the display of the display screen (the display screen W120 in FIG. 9A) and transition the display of the screen to the previous screen or transition to the home screen.

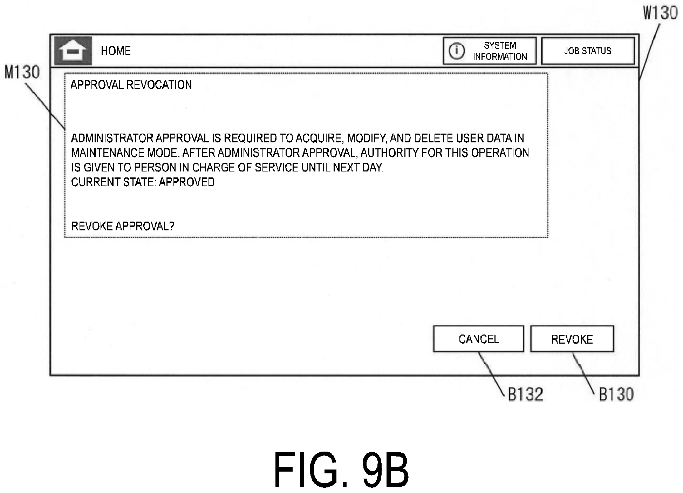

FIG. 9B is a diagram illustrating an operation of the display screen displayed on the display 140 of the image forming apparatus 10 as a revocation screen transitioned from the display screen W120 when the service engineer or the administrator selects the display button B122.

A display screen W130 in FIG. 9B displays a message M130 stating that "Approval revocation: Administrator approval is required to acquire, modify, or delete user data in the maintenance mode. After the administrator approval, the authority for this operation is given to the person in charge of service until the next day. Current status: Approved. Do you want to revoke the approval?".

Further, the display screen W130 displays
a display button B130 for revoking the approval given from the administrator to transition to the unapproved state and a display button B132 for ending the display of the display screen W130 and displaying the display screen W120.

Here, when the administrator selects the display button B130, the controller 100 revokes the approval from the administrator for the maintenance work by the service engineer to transition to the unapproved state, and displays the display screen W100 on the display 140.

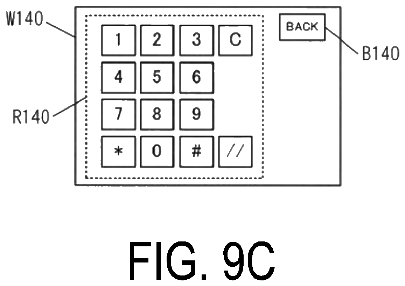

FIG. 9C is a diagram illustrating an operation of the display screen displayed on the display 140 of the image forming apparatus 10, as the screen for inputting a number corresponding to the maintenance function that the service engineer desires to execute. In the display screen W140 in FIG. 9C, an entry area R140 for inputting a number is secured, and a display button B140 for executing the logout processing T22 from the service engineer mode 20d and returning to the home screen is displayed.

Here, when the service engineer inputs, for example, a number corresponding to a maintenance function desired to be executed in the entry area R140, the controller 100 can display a screen for executing the maintenance function when the maintenance function corresponding to the inputted number is not restricted.

In the present embodiment, a case where the service engineer login processing T20 is executed is taken as an example, but different processing may be executed. The controller 100 may execute the processing shown in FIG. 5 not only when the service engineer login processing T20 is executed but also when an instruction to display a service authentication screen (the display screen W100 or the display screen W120) of FIG. 8A is given.

At this time, the controller 100 may determine the presence or absence of approval from the administrator at a timing when the operation for displaying the service authentication screen is performed, and display the display screen W100 if there is no approval from the administrator, and display the display screen W120 if there is approval from the administrator.

### 1.7 Effects and the Like

The present embodiment can, for example, give administrator approval for the maintenance work by the service engineer according to the maintenance work desired by the administrator and cause the service engineer to appropriately execute the maintenance work of the image forming apparatus.

That is, for a maintenance function that requires the administrator approval, such as acquisition, modification, and deletion of user data, and setting of security-related functions, the service engineer can be allowed to execute the maintenance work only when the administrator gives approval. For a maintenance function that does not require administrator approval or does not require administrator authority, it is possible to cause the service engineer to execute the maintenance work without the administrator approval. It is possible to provide an image forming apparatus that can easily revoke the approval given by the administrator (invalidate the administrator approval) and automatically invalidate the approval with the lapse of time even when the approval is not manually revoked.

### 2. Second Embodiment

Hereinafter, a second embodiment will be described. In the second embodiment, administrator approval can be given for each maintenance function classification.

In the second embodiment, the same hardware and software configurations as those of the first embodiment will not be described, and differences from the first embodiment will be mainly described.

### 2.1 Software Configuration

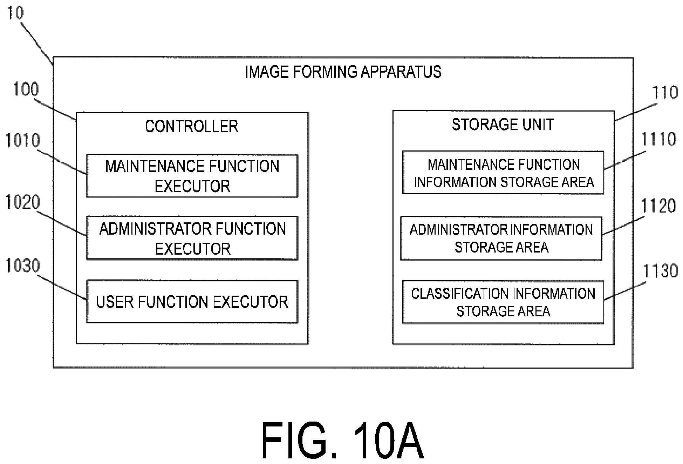

FIG. 10A is a diagram illustrating the software configuration of the image forming apparatus 10.

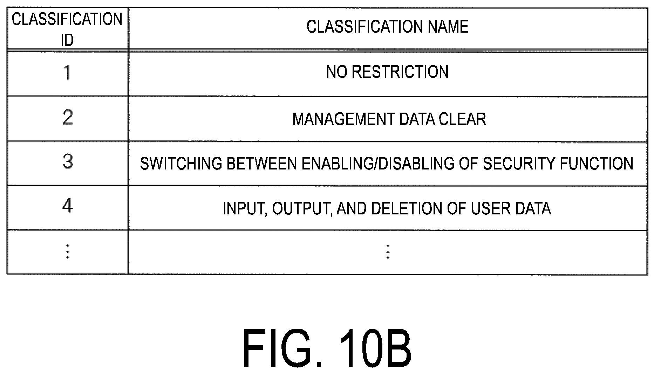

The storage unit 110 secures a classification information storage area 1130 for storing classification information. The classification information is information regarding the maintenance function classification. Here, an example of the classification information stored in the classification information storage area 1130 will be described with reference to FIG. 10B. As the classification information, a classification ID (for example, "4") and a classification name (for example, "input, output, and deletion of user data") are stored as identification information uniquely assigned to each classification of the maintenance function information.

### 2.2 Processing Flow

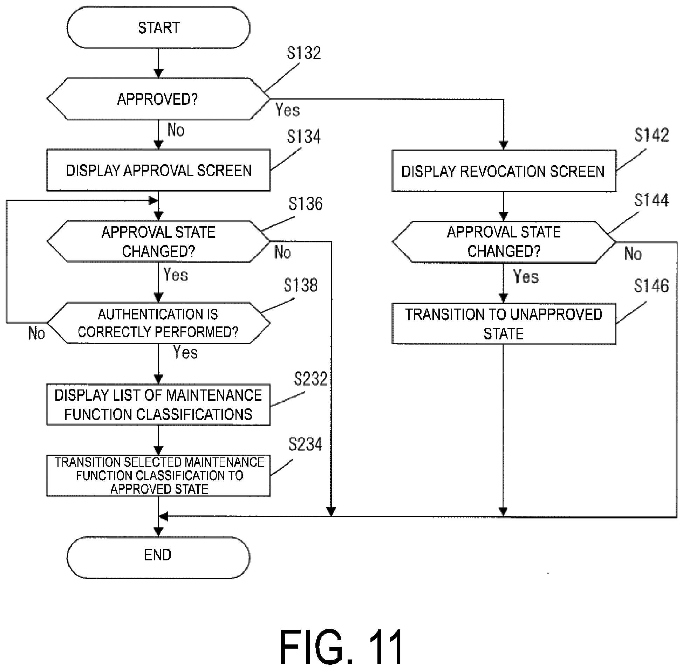

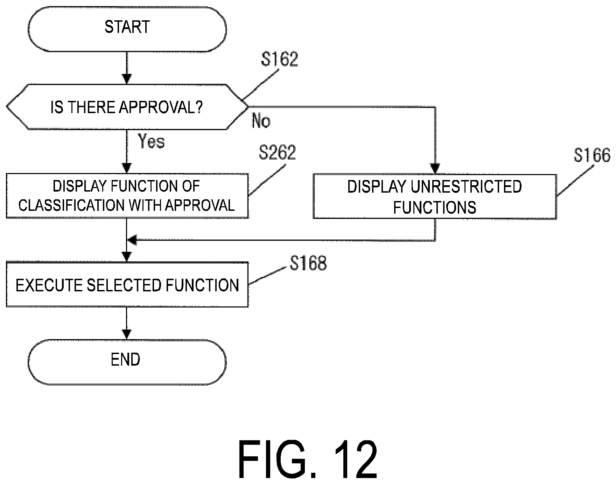

Hereinafter, a processing flow in the present embodiment will be described with reference to FIGS. 11 and 12.

### 2.2.1 Approval Change Processing

FIG. 11 is a diagram illustrating a flow of approval change processing. FIG. 11 is a replacement for FIG. 6 in the first embodiment, and S232 to S234 are executed after S138.

If the authentication is correctly performed, the controller 100 displays a list of classifications to be approved by the administrator on the display 140 (S138; Yes → S232).

Next, the controller 100 transitions to the approved state (the approval flag corresponding to the classification is "ON"), determining that the maintenance function classification, which is selected by the administrator from among the classifications displayed in the list, is approved by the administrator (S234).

### 2.2.2 Maintenance Function Execution Processing

FIG. 12 is a flowchart illustrating an operation of the maintenance function execution processing. FIG. 12 is a replacement for FIG. 7 in the first embodiment, and S262 is executed instead of S164.

For example, if the approval flag is "ON", the controller 100 displays that the function of the approved classification (the function for which the approval flag corresponding to the classification is "ON") among the maintenance functions is executable (S162; Yes → S262).

### 2.3 Operation Example

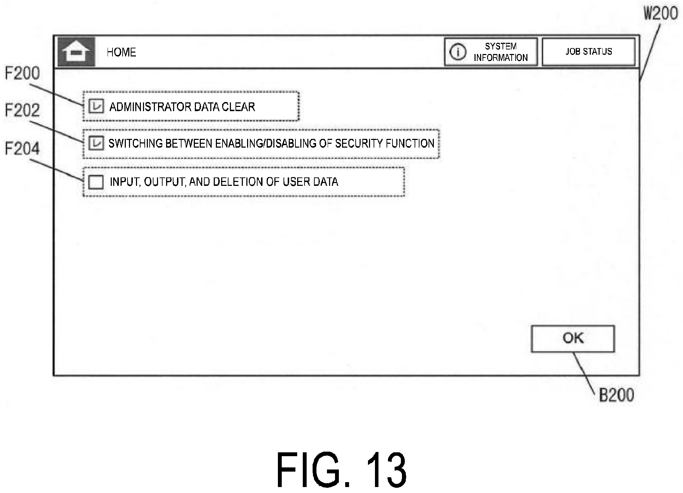

FIG. 13 is a diagram illustrating an operation of the display screen displayed on the display 140 of the image forming apparatus 10 as a display screen transitioned from the display screen W110 when the administrator selects the display button B110 of the display screen W110.

In a display screen W200 of FIG. 13, an entry form F200 for selecting a classification, an entry form F202 for selecting a classification, and an entry form F204 for selecting a classification are displayed in a list. Further, a display button B200 for ending classification selection is displayed on the display screen W200.

Here, when the administrator selects the entry form F200 and the entry form F202 and selects the display button B200, the controller 100, for example, assigns the administrator approval to the selected classification to transition to the approved state, and displays the display screen W120 on the display 140.

In this manner, the administrator can give approval for each classification of the maintenance functions to the service engineer.

### 3. Third Embodiment

Hereinafter, a third embodiment will be described. The third embodiment is an embodiment in which, when there are a plurality of administrators, approval can be given for each classification on the basis of the authority of each administrator.

In the third embodiment, the same hardware and software configurations as those of the first embodiment and the second embodiment will not be described, and differences from the first embodiment and the second embodiment will be mainly described.

### 3.1 Software Configuration

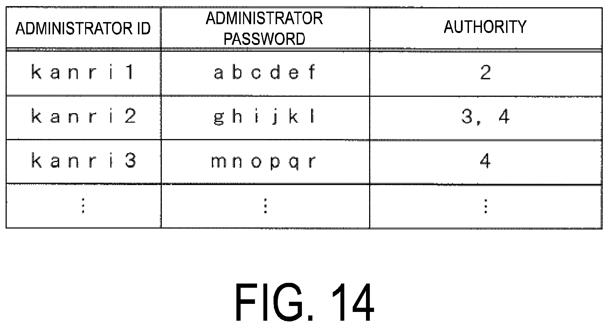

In the present embodiment, the administrator information stored in the administrator information storage area 1120 includes a plurality of administrators. Here, an example of the administrator information stored in the administrator information storage area 1120 will be described with reference to FIG. 14. As the administrator information, an administrator ID (for example, "Kanril"), an administrator password (for example, "abcdef"), and authority (for example, "2") corresponding to a classification in which the administrator can give approval to the service engineer are stored as identification information uniquely given to each administrator.

### 3.2 Processing Flow

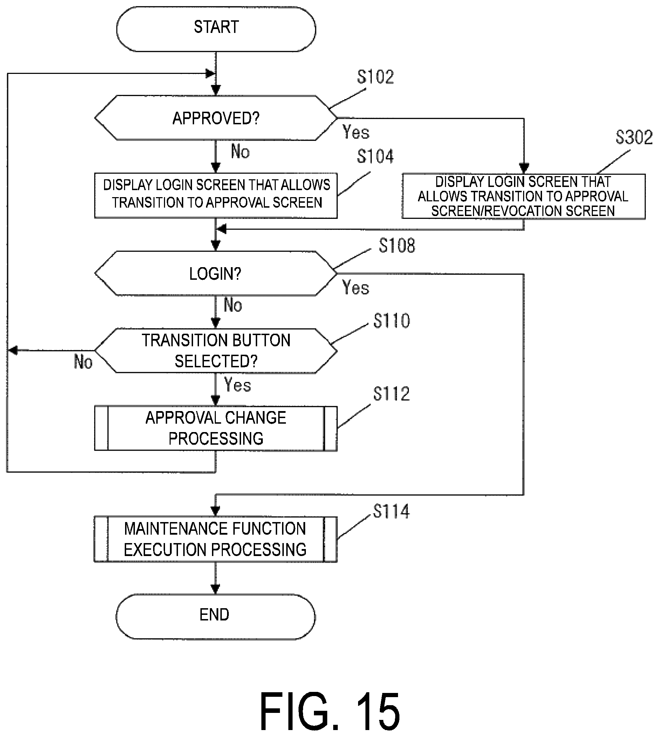

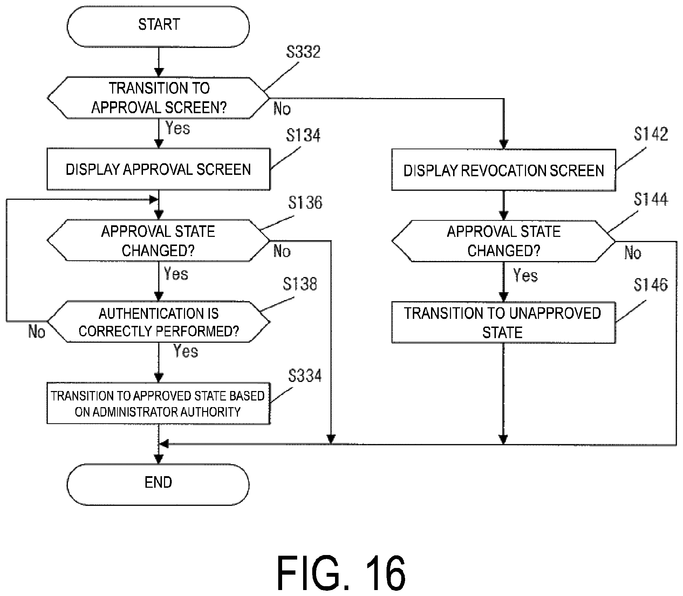

Hereinafter, a processing flow in the present embodiment will be described with reference to FIGS. 15 and 16.

### 3.2.1 Main Processing

FIG. 15 is a diagram illustrating a main flow. FIG. 15 is a replacement for FIG. 5 in the first embodiment, and S302 is executed instead of S106.

First, if it is determined that approval is given, the controller 100 displays, on the display 140, a login screen that allows transition to an approval screen and a revocation screen (S102; Yes → S302).

In this case, transition buttons may include a first transition button having an attribute of "approval" and a second transition button having an attribute of "revocation". For example, the controller 100 may hide the second transition button during the unapproved state (the approval flag is "OFF") and may display the second transition button during the approved state (the approval flag is "ON").

### 3.2.2 Approval Change Processing

FIG. 16 is a diagram illustrating a flow of approval change processing. FIG. 16 is a replacement for FIG. 6 in the first embodiment, S332 are executed after S132, and S334 are executed after S140.

First, the controller 100 determines whether or not a transition to the approval screen is made (S332). Here, if the first transition button having the attribute of "approval" is selected, the controller 100 displays the approval screen (S332; Yes → S134). On the other hand, if the second transition button having the attribute of "revocation" is selected, the controller 100 displays a revocation screen (S332; No → S142).

If the authentication is correctly performed, the controller 100 transitions to the approved state on the basis of the administrator authority, determining that approval is given by the administrator (S138; Yes → S334). For example, the controller 100 compares the authority of the administrator information with the classification of the maintenance function information, and sets the approval flag of the corresponding classification to "ON".

### 3.2.3 Maintenance Function Execution Processing

In the present embodiment, the maintenance function execution processing may be the same as that of the second embodiment. The controller 100 displays that the function of the approved classification among the maintenance functions is executable, displays a screen for executing the maintenance function corresponding to the number input by the service engineer on the display screen W140, and accepts the maintenance work from the service engineer.

### 3.3 Operation Example

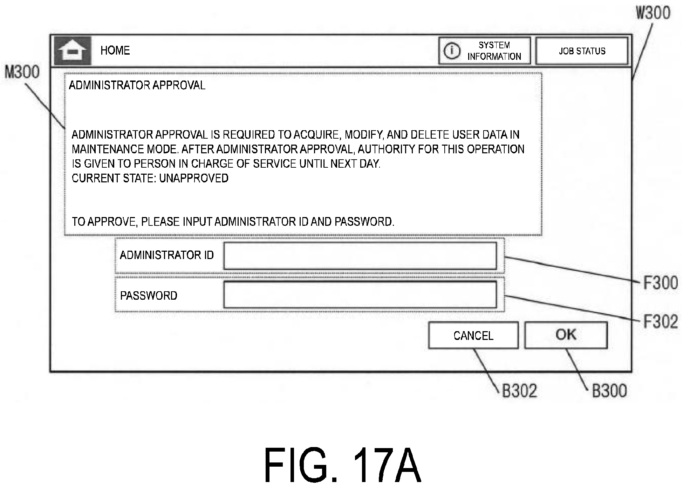

FIG. 17A is a diagram illustrating an operation of the display screen displayed on the display 140 of the image forming apparatus 10 as an approval screen transitioned from the display screen W100 when the service engineer or the administrator selects the display button B102.

A display screen W300 in FIG. 17A displays a message M300 stating that "Administrator approval: Administrator approval is required to acquire, modify, and delete user data in the maintenance mode. After the administrator approval, the authority for this operation is given to the person in charge of service until the next day. Current state: Unapproved. To approve, please input the administrator ID and the password".

Further, the display screen W300 displays an entry form F300 for the administrator to input the administrator ID and an entry form F302 for the administrator to input the administrator password. Further, the display screen W300 displays a display button B300 for giving administrator approval to transition to the approved state, and a display button B302 for ending the display of the display screen W300 and displaying the display screen W100.

Here, when the administrator inputs the administrator ID in the entry form F300 and the administrator password in the entry form F302 and selects the display button B300, the controller 100 performs authentication of the administrator. Then, when the authentication of the administrator is successful, the controller 100 sets the classification corresponding to the authority of the administrator to the approved state, and displays a display screen W310 on the display 140.

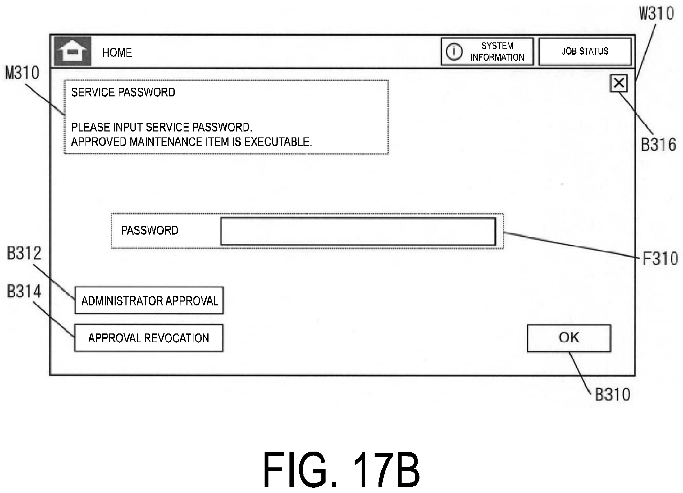

FIG. 17B is a diagram illustrating an operation of the display screen displayed on the display 140 of the image forming apparatus 10 in a case of an approved state in which one or more administrators give approval for the maintenance work by the service engineer, as the login screen for executing the service engineer login processing T20.

The display screen W310 in FIG. 17B displays a message M310 stating that "Service password: Please input the service password. The approved maintenance item is executable". Here, when the administrator has approved all the maintenance items, the controller 100 may, for example, display the display screen W120 instead of the display screen W310.

The display screen W310 displays an entry form F310 for the service engineer to input a password and a display button B310 for executing login processing. The display screen W310 displays a display button B312 as the first transition button for transitioning to the approval screen and a display button B314 as the second transition button for transitioning to the revocation screen. The display screen W310 displays a display button B316 for canceling the execution of the service engineer login processing T20.

Here, when the service engineer inputs a password in the entry form F310 and selects the display button B310, for example, a display screen W140 may be displayed as a screen for inputting a number corresponding to a maintenance function that the service engineer desires to execute. Alternatively, the controller 100 displays, for example, the maintenance function of the classification corresponding to the authority of the administrator who has given approval. On the other hand, when the service engineer or the administrator selects the display button B314, the controller 100 causes the display screen W310 to transition to the display screen W130.

When the user selects the display button B316, for example, the controller 100 controls the display 140 to end the display of the display screen (the display screen W310 in FIG. 17B) and transition the display of the screen to the previous screen or transition to the home screen.

In this way, even if each administrator has different authority, it is possible to give approval to the service engineer for each classification that can be permitted by the administrator.

### 4. Fourth Embodiment

Hereinafter, a fourth embodiment will be described. The fourth embodiment is an embodiment in which approval can be given to each user including the administrator, instead of the administrator.

In the fourth embodiment, the same hardware and software configurations as those of the first embodiment and the third embodiment will not be described, and differences from the first embodiment and the third embodiment will be mainly described.

### 4.1 Software Configuration

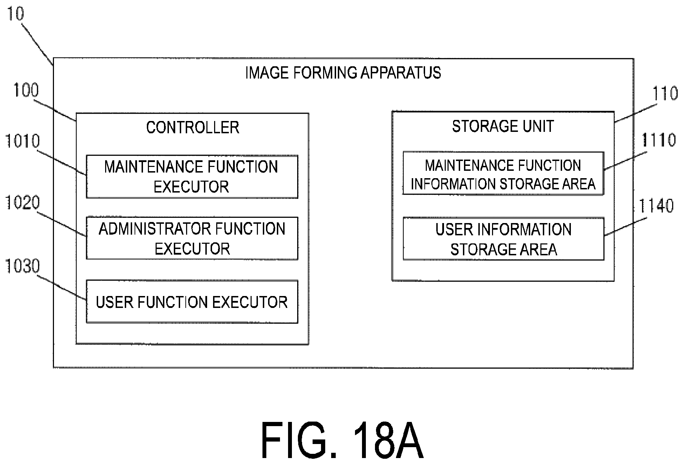

FIG. 18A is a diagram illustrating the software configuration of the image forming apparatus 10.

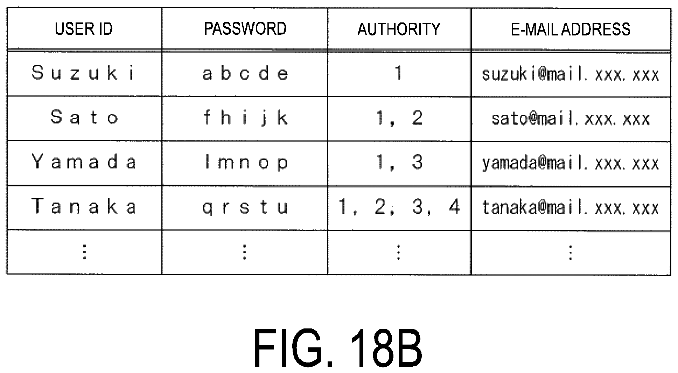

The storage unit 110 secures a user information storage area 1140 for storing user information. The user information is information regarding users including an administrator, a service engineer, and a general user. Here, an example of the user information stored in the user information storage area 1140 will be described with reference to FIG. 18B. As the user information, a user ID (for example, "Sato"), a password (for example, "thijk"), authority (for example, "1, 2") corresponding to a classification ID with which a user including an administrator can give approval to a service engineer, and an e-mail address (for example, "sato@mail.xxx.xxx") are stored as identification information uniquely given to each user.

### 4.2 Processing Flow

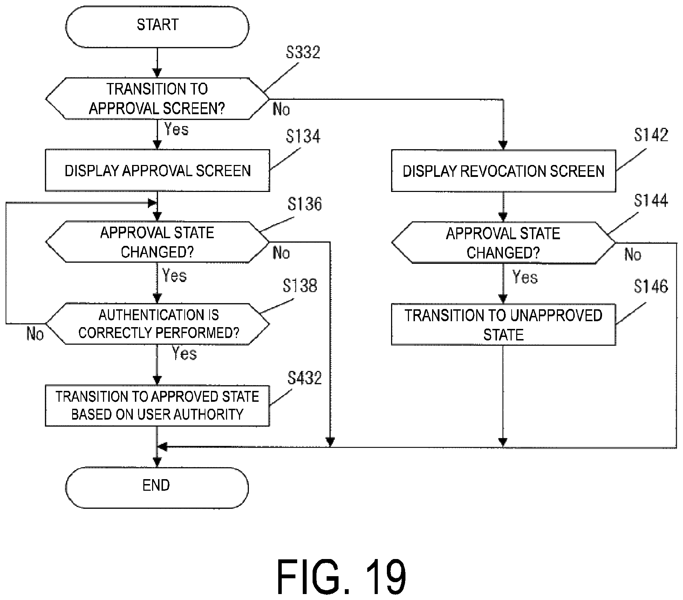

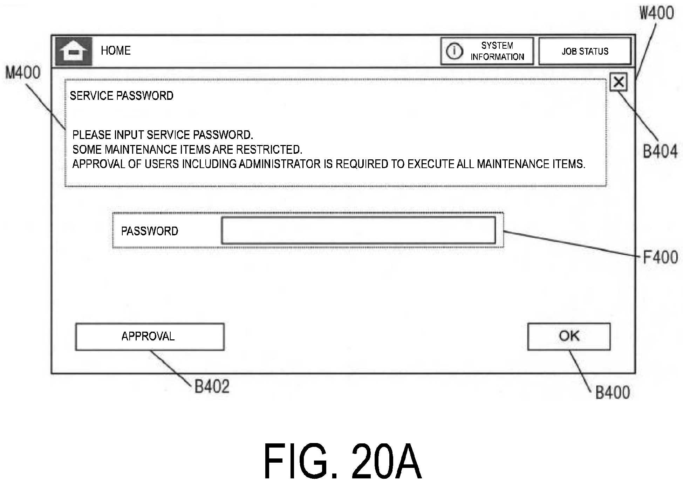

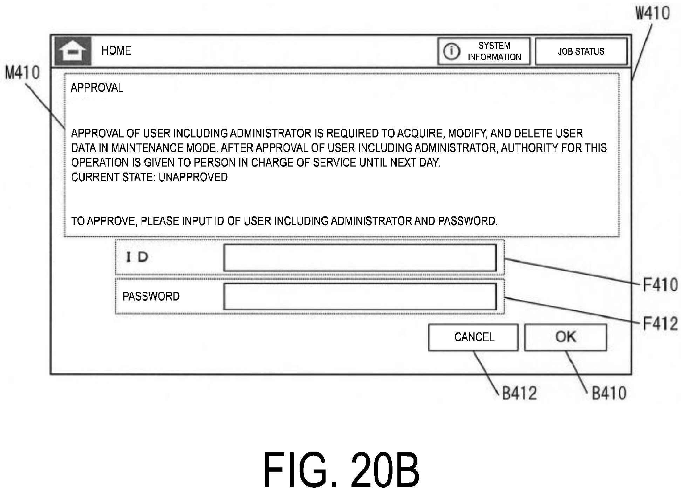

Hereinafter, a processing flow in the present embodiment will be described with reference to FIGS. 19 and 20A and 20B.

### 4.2.1 Main Processing

In the present embodiment, main processing may be the same as that of the third embodiment. When approval is given from at least one or more users, a login screen that allows transition to an approval screen and a revocation screen is displayed on the display 140.

### 4.2.2 Approval Change Processing

FIG. 19 is a diagram illustrating a flow of approval change processing. FIG. 19 is a replacement for FIG. 16 in the third embodiment, and S432 is executed instead of S334.

If the authentication is correctly performed, the controller 100 transitions to the approved state on the basis of the authority of the user including the administrator, determining that approval is given by the user including the administrator (S138; Yes → S432). For example, the controller 100 compares the authority of the user information with the classification of the maintenance function information, and sets the approval flag of the corresponding classification to "ON".

### 4.2.3 Maintenance Function Execution Processing

In the present embodiment, the maintenance function execution processing may be the same as that of the second embodiment, or partially different processing may be performed. For example, the controller 100 may allow only a user who has given approval to the service engineer to access the user data.

Further, the controller 100 may permit only a user who has given the approval to the service engineer to execute some maintenance functions related to input, output, and deletion of user data, such as a user data checking function and a user data editing function.

### 4.3 Operation Example

FIG. 20A is a diagram illustrating an operation of the display screen displayed on the display 140 of the image forming apparatus 10 in a case of an unapproved state in which approval has not been given by any user, as the login screen for executing the service engineer login processing T20.

A display screen W400 in FIG. 20A displays a message M400 stating that "Service password: Please input the service password. Some maintenance items are restricted. Approval of users including the administrator is required to execute all maintenance items". Further, the display screen W400 displays an entry form F400 for the service engineer to input a password, a display button B400 for executing login processing, and a B402 as the first transition button for transitioning to the approval screen. The display screen W400 displays a display button B404 for canceling the execution of the service engineer login processing T20.

Here, when the service engineer inputs a password in the entry form F400 and selects the display button B400, for example, the display screen W140 may be displayed as a screen for inputting a number corresponding to a maintenance function that the service engineer desires to execute. Alternatively, the controller 100 may display a display screen on the display 140, the display screen displaying an executable maintenance function of "no restriction" such as an optical system sensor check function or a scanner operation check function.

When the user selects the display button B404, for example, the controller 100 controls the display 140 to end the display of the display screen (a display screen W400 in FIG. 20A) and transition the display of the screen to the previous screen or transition to the home screen.

FIG. 20B is a diagram illustrating an operation of the display screen displayed on the display 140 of the image forming apparatus 10 as an approval screen transitioned from the display screen W400 when the user including the service engineer or administrator selects the display button B402.

The display screen W410 in FIG. 20B displays a message M410 stating that "Approval: Approval of a user including an administrator is required to acquire, modify, and delete user data in the maintenance mode. After the approval of the user including the administrator, the authority for this operation is given to the person in charge of service until the next day. Current state: Unapproved. To approve, please input the ID of the user including the administrator and password".

Further, the display screen W410 displays an entry form F410 for the user including the administrator to input an ID and an entry form F412 for the user including the administrator to input a password. The display screen W410 displays a display button B410 for giving approval of the user including the administrator to transition to the approved state and a display button B412 for canceling the approval of the user including the administrator (ending the display of the display screen W410) and displaying the display screen W400.

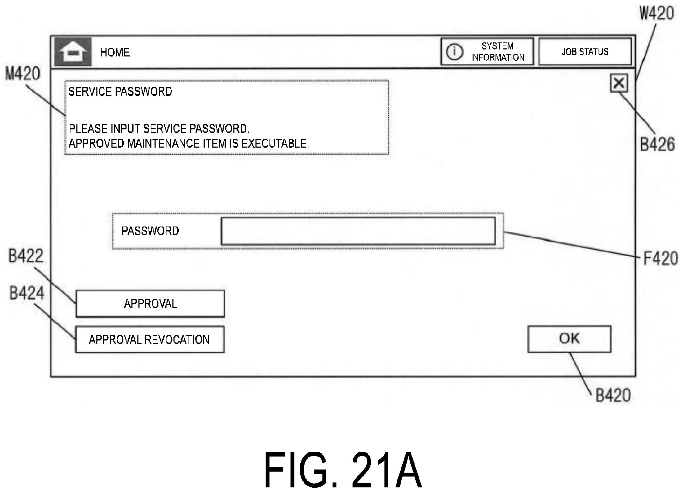

FIG. 21A is a diagram illustrating an operation of the display screen displayed on the display 140 of the image forming apparatus 10 in a case of an approved state in which approval is given from one or more users, as the login screen for executing the service engineer login processing T20.

A display screen W420 in FIG. 21A displays a message M420 stating that "Service password: Please input the service password. The approved maintenance item is executable".

Further, the display screen W420 displays an entry form F420 for the service engineer to input a password and a display button B420 for executing login processing. The display screen W420 displays a display button B422 as the first transition button for transitioning to the approval screen and a display button B424 as the second transition button for transitioning to the revocation screen. The display screen W420 displays a display button B426 for canceling the execution of the service engineer login processing T20.

When the user including the administrator has approved all the maintenance items, the controller 100 may, for example, display the display screen W120 instead of the display screen W420.

Here, when the service engineer inputs a password in the entry form F420 and selects the display button B420, for example, the display screen W140 may be displayed as a screen for inputting a number corresponding to a maintenance function that the service engineer desires to execute. Alternatively, the controller 100 may, for example, display, on the display 140, the maintenance function of the classification corresponding to the authority of the administrator who has given the approval. On the other hand, when the service engineer or the administrator selects the display button B424, the controller 100 causes the display screen W420 to transition to the display screen W130.

When the user selects the display button B426, for example, the controller 100 controls the display 140 to end the display of the display screen (a display screen W420 in FIG. 21A) and transition the display of the screen to the previous screen or transition to the home screen.

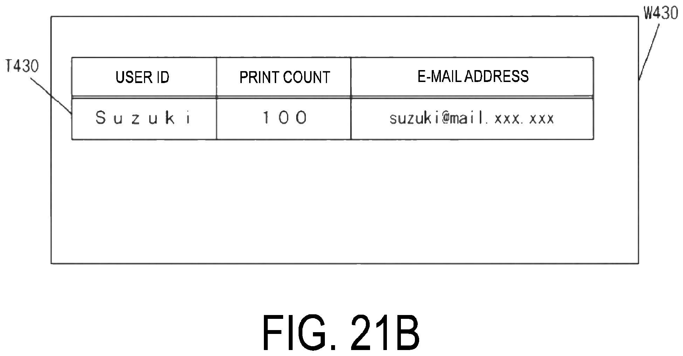

FIG. 21B is a diagram illustrating an operation of the display screen displayed on the display 140 of the image forming apparatus 10 when the display button B400 is selected and the user data checking is executed among the executable maintenance functions displayed on the display 140.

A display screen W430 in FIG. 21B displays a table T430 for displaying data regarding the user. Here, the table T430 displays data regarding one user who has given approval to the logged-in service engineer.

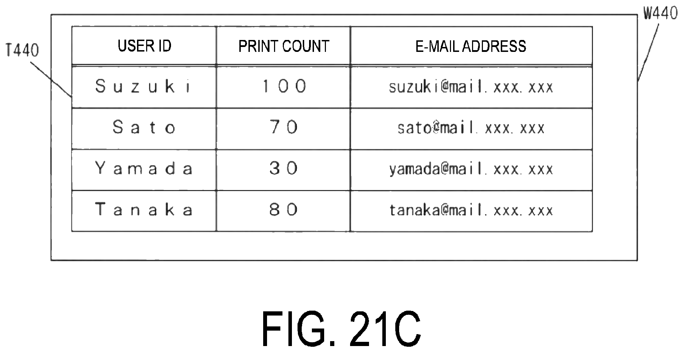

FIG. 21C is a diagram illustrating an operation of the display screen displayed on the display 140 of the image forming apparatus 10 when the display button B420 is selected and the user data checking is executed among the executable maintenance functions displayed on the display 140.

A display screen W440 in FIG. 21C displays a table T440 for displaying data regarding the user. Here, the table T440 displays data regarding all users including the administrator who have given approval to the logged-in service engineer.

In the present embodiment, the controller 100 may determine the presence or absence of approval from one or more users at a timing when the operation for displaying the login screen for executing the service engineer login processing T20 is performed and may determine which of the display screen W400 and the display screen W420 is to be displayed.

The controller 100 may display the display screen W400 when there is no approval from one or more users. On the other hand, the controller 100 may display the display screen W420 when there is approval from one or more users.

In this way, when the administrator having all the authorities gives approval, all functions are executable, and access to the user data is enabled. When the administrator having some authorities gives approval, functions for which the administrator has authority become executable. When a general user gives approval, access to the user data for the approved user is enabled, and further, the input, output, and deletion of the user data is enabled.

### 5. Fifth Embodiment

Hereinafter, a fifth embodiment will be described. The fifth embodiment is an embodiment in which the login screen is not displayed when approval has not been given by the administrator as a special security state.

In the fifth embodiment, the same hardware and software configurations as those of the first embodiment will not be described, and differences from the first embodiment will be mainly described.

In the present embodiment, as a special security setting, the administrator can display the approval screen on the display 140 before displaying the login screen for executing the service engineer login processing T20 by, for example, executing a function that can be executed in the administrator mode 20c.

### 5.1 Processing Flow

### 5.1.1 Main Processing

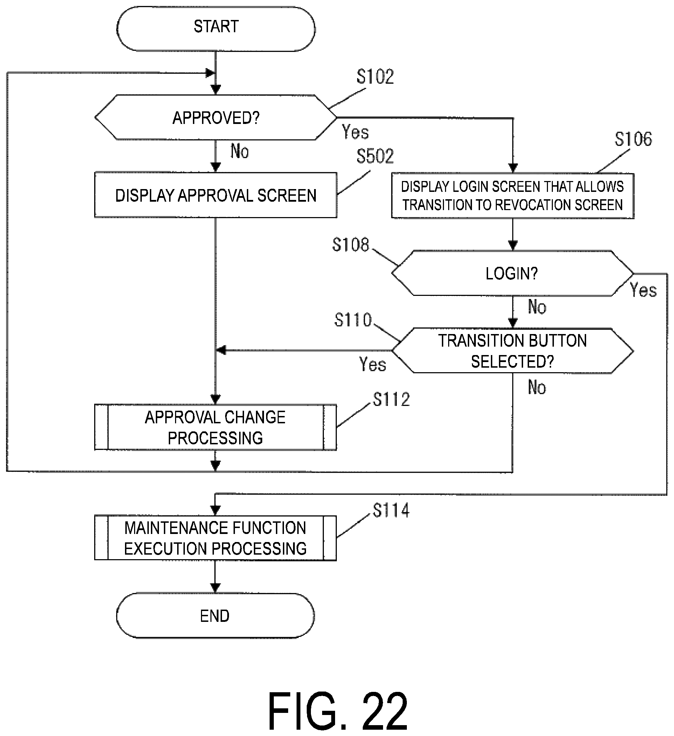

FIG. 22 is a diagram illustrating a main flow. FIG. 22 is a replacement for FIG. 5 in the first embodiment, and S502 is executed between S102 and S112.

If it is determined that approval has not been given by the administrator, the controller 100 causes the display 140 to display the approval screen, and then executes the approval change processing (S102; No → S502 → S112).

### 5.1.2 Approval Change Processing

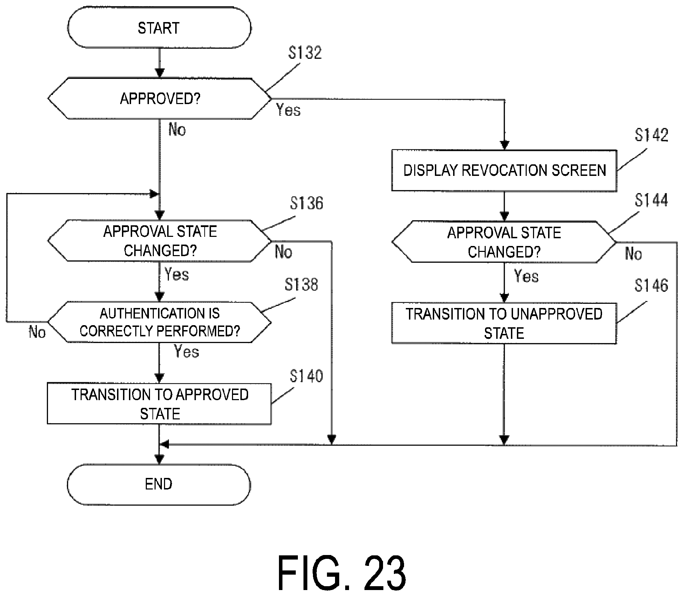

FIG. 23 is a flowchart illustrating an operation of the approval change processing. FIG. 23 is a replacement for FIG. 6 in the first embodiment, and S134 is not executed.

### 5.2 Operation Example

When the special security setting is set and approval from the administrator is given for the maintenance work by the service engineer, the controller 100 displays the display screen W110 as the approval screen on the display 140, before displaying the login screen for executing the service engineer login processing T20.

When the administrator inputs the administrator password in the entry form F110 on the display screen W110 and selects the display button B110, the controller 100 performs authentication of the administrator. Then, when the authentication of the administrator is successful, the controller 100 displays a display screen W120 on the display 140.

Next, when the service engineer or the administrator selects the display button B122 on the display screen W120, the controller 100 causes the display 140 to display the display screen W130 as the revocation screen. Next, when the user selects the display button B130, the controller 100 causes the display 140 to display the display screen W110 as the approval screen.

As described above, as the special security setting, the login screen for executing the service engineer login processing is not displayed unless the approval of the administrator is given, and thus it is possible to protect the user data more safely.

### 6. Modification

The present disclosure is not limited to the embodiments described above and can be modified in various ways.

In other words, embodiments obtained by combining technical mechanisms appropriately changed without departing from the gist of the present disclosure are also included in the technical scope.

With the development of laws for security enhancement such as the Cyber Resilience Act, RED (EU Radio Equipment Directive 2014/53/EU), and the IoT Cyber Security Improvement Act, processing apparatuses introduced into markets of regions and countries subject to these laws and regulations may be required to have further enhanced security measures for the purpose of protecting information within the processing apparatuses and defending against external attacks.

In such a case, the processing apparatus may require the service engineer login processing before the maintenance function is executed by the service engineer only when the introduction destination (shipping destination) of the processing apparatus is a specific destination such as a country or a region under the system of the security enhancement act.

However, even when the introduction destination (shipping destination) of the processing apparatus is not the specific destination, the service engineer login processing may be required before the maintenance function is executed by the service engineer if the processing apparatus is set to request the service engineer login processing before the maintenance function is executed by the service engineer or if the processing apparatus is in a specific security state (for example, a higher security state than usual).

Although the above-described embodiments have been separately described for convenience of description, the embodiments can be combined and executed within an allowable range. The right of any of the technologies described herein is intended to be acquired through amendment, divisional application, or the like.

The programs running on each apparatus in the embodiments are programs for controlling a CPU or the like (programs for causing a computer to function) to implement the aforementioned functions in the embodiments. Information handled by these apparatuses is temporarily accumulated in a transitory storage apparatus (for example, a RAM) at the time of processing, is then stored in a storage apparatus such as any of various ROMs or an HDD, and is read, corrected, and written by the CPU as needed.

The recording medium storing the programs may be any of a semiconductor medium (for example, a ROM, a non-volatile memory card, or the like), an optical recording medium or a magneto-optical recording medium (for example, a Digital Versatile Disc (DVD), a Compact Disc (CD), a Blu-ray (trade name) Disc (BD) or the like), a magnetic recording medium (for example, a magnetic tape, a flexible disk, or the like), and the like.

In a case where the programs are distributed to market, the programs can be stored and distributed in a portable recording medium, or can be transferred to a server computer connected via a network such as the Internet. In this case, it is a matter of course that the storage apparatus of the server device is also included in the present disclosure.

Instead of being stored in the apparatus, the above-described data may be stored in an external apparatus and called as appropriate. For example, the data may be stored in a network attached storage (NAS) or may be stored on a cloud.

It should be noted that the scope of the present disclosure is not limited to the configurations explicitly described in the present specification, and a combination of technologies disclosed herein is also included in the scope thereof. Configurations of the present disclosure sought to be patented are set forth in the appended claims, but configurations not recited in the claims are not intended to be excluded from the technical scope.

In the above-described specification, the descriptions "in a case in which ..." and "when ..." are described as examples, and the configuration is not limited to the described contents. Configurations not indicated by the descriptions "in a case in which ..." and "when ..." are also disclosed to the extent that the configurations are obvious to those skilled in the art, and the rights thereof are intended to be acquired.

The processing and the flow of data have been described herein in order, but the order thereof is not limited to the described order. For example, a configuration in which processing is partly removed or the order is rearranged is also disclosed, and the right thereof is intended to be acquired.

Although the functions described in the embodiments are described as being performed in the respective apparatuses, the functions may be implemented in one apparatus or by using an external server.

Each functional block or various features of the apparatus used in the above-described embodiments may be implemented or executed by an electric circuit such as, for example, an integrated circuit or a plurality of integrated circuits. An electric circuit designed to perform the functions described in the present specification may include a general-purpose processor, a digital signal processor (DSP), an application specific integrated circuit (ASIC), a field programmable gate array (FPGA) or other programmable logic apparatus, discrete gate or transistor logic, discrete hardware components, or a combination thereof. The general-purpose processor may be a microprocessor or may be a known processor, controller, microcontroller, or state machine. The electric circuit described above may include a digital circuit or an analog circuit. When an integrated circuit technology for replacement into a current integrated circuit emerges with the development of semiconductor technology, a new integrated circuit based on the technology may also be used in one or more modes of the present disclosure.

While there have been described what are at present considered to be certain embodiments of the invention, it will be understood that various modifications may be made thereto, and it is intended that the appended claim cover all such modifications as fall within the true spirit and scope of the invention.

## Claims

1. A processing apparatus (10), comprising:
an executor (1010) that executes a maintenance function;
a display (140); and
one or more controllers (100), wherein
the one or more controllers (100)
display, on the display (140), a login screen with a transition button and for a service engineer to log in to a mode for executing the maintenance function,
display, when administrator approval for execution of the maintenance function by the service engineer has not been given, an approval screen on the display (140) upon selection of the transition button on the login screen, and
receive, on the approval screen, a giving instruction for the administrator approval for the execution of the maintenance function by the service engineer.

2. The processing apparatus (10) according to claim 1, wherein
the one or more controllers (100)
receive the giving instruction for the administrator approval for the execution of the maintenance function by the service engineer upon input of a password of the administrator on the approval screen.

3. The processing apparatus (10) according to claim 1, wherein
the one or more controllers (100) keep valid, until a predetermined time has elapsed, the administrator approval for the execution of the maintenance function by the service engineer, which is given in response to the giving instruction.

4. The processing apparatus (10) according to claim 1, wherein
the one or more controllers (100)
display, when administrator approval for execution of the maintenance function by the service engineer has been given, a revocation screen on the display (140) upon selection of the transition button on the login screen and
receive, on the revocation screen, an instruction to revoke the administrator approval for the execution of the maintenance function by the service engineer.

5. The processing apparatus (10) according to claim 1, wherein
the one or more controllers (100)
display, when the processing apparatus (10) is in a specific security state, the approval screen on the display (140) before displaying the login screen on the display (140).

6. A display method, comprising:
an execution step of executing a maintenance function;
a display step; and
a control step, wherein
the control step includes
displaying, in the display step, a login screen with a transition button and for a service engineer to log in to a mode for executing the maintenance function,
displaying, when administrator approval for execution of the maintenance function by the service engineer has not been given, an approval screen in the display step upon selection of the transition button on the login screen, and
receiving, on the approval screen, a giving instruction for the administrator approval for the execution of the maintenance function by the service engineer.
